# EUROPÄISCHE PATENTSCHRIFT

(11) **EP 1 163 093 B1**
(45) Veröffentlichungstag und Bekanntmachung des Hinweises auf die Patenterteilung: **11.09.2002**
(21) Anmeldenummer: 00918672.7
(22) Anmeldetag: 24.02.2000
(51) Int. Cl.: B29C 43/00, B29C 45/00

(54) **BAUTEIL AUS FASERN VON NACHWACHSENDEN ROHSTOFFEN**
COMPONENT MADE OF FIBRES OF RECYCLABLE RAW MATERIALS
PIECE COMPRENANT DES FIBRES EN MATIERE PREMIERE RECYCLABLE

(30) Priorität: 26.02.1999 DE 19908348
(43) Veröffentlichungstag der Anmeldung: 19.12.2001
(73) Patentinhaber: Möller Plast GmbH, 33649 Bielefeld (DE)
(72) Erfinder: BECKMANN, Friedhelm, D-32120 Hiddenhausen (DE)
(74) Vertreter: Schirmer, Siegfried, Dipl.-Ing.
(86) Internationale Anmeldenummer: DE0000516
(87) Internationale Veröffentlichungsnummer: WO00050210

(56) Entgegenhaltungen:
- EP-A- 0 319 589
- DE-C- 19 705 280

## Beschreibung

Die Erfindung betrifft ein Bauteil aus Fasern von nachwachsenden Rohstoffen und einem Bindeharz.

Bauteile aus nachwachsenden Rohstoffen, vorzugsweise aus Fasern und Schäben, mit einem Bindeharz sind bekannt. Die Herstellung erfolgt überwiegend im Spritzgieß- oder Pressverfahren. Als Bindeharz werden dabei duroplastische Materialien (Pressverfahren) oder thermoplastische Materialien (Spritzgieß- und Pressverfahren) eingesetzt. Als thermoplastisches Material wird dabei wegen der geringen Temperaturbelastbarkeit der Naturfasern Polypropylen verwendet. Für die Herstellung von Leichtbauteilen ist der Einsatz von Schaumsystemen wie Polyurethan bekannt. Polyurethan kann dabei in geschäumter oder kompakter Form eingesetzt werden. Duroplastische Werkstoffe weisen zwar gute mechanische Kennwerte auf, jedoch ist eine Recyclierbarkeit zur Herstellung artverwandter Bauteile nicht gegeben.

Polypropylen ist wegen der unterschiedlichen Polarität zu den Naturfasern zunächst unverträglich, so daß zur Verbesserung der Haftungseigenschaften Verträglichkeitsmacher der Materialrezeptur zugemischt werden müssen. Darüber hinaus weist Polypropylen besonders bei den mechanischen Kennwerten nur ein begrenztes Eigenschaftsprofil auf und ist deshalb für hochbeanspruchte Bauteile ungeeignet. Weitere Einschränkungen ergeben sich in den Mischungsverhältnissen mit dem Naturfasermaterial, wobei üblicherweise ein Anteil von 50 % Naturfasern nicht überschritten wird. Polyurethansysteme mit Naturfasern weisen Einschränkungen in der Recyclierbarkeit auf. Darüber hinaus können durch Unterschiede in der Imprägnierung der Fasern schwankende Materialkennwerte auftreten.

Aus der DE 197 05 280 C1 ist ein faserverstärktes Kunststoff-Formteil bekannt, dessen Kunststoffmatrix mindestens zwei miteinander vermischte Polymere aufweist, von denen eines ein Bio-Polymer und das andere ein gegenüber biologischen Beanspruchungen zumindest weitgehend resistentes Polymer ist.

Der Erfindung liegt die Aufgabe zugrunde, ein Bauteil der aufgezeigten Gattung zu schaffen, bei dem eine Verbesserung der Haftungseigenschaften durch Zumischung von Verträglichkeitsmachern nicht erforderlich ist und der Anteil der nachwachsenden Rohstoffe wesentlich erhöhbar ist, wobei auf die Oberfläche Funktionselemente aufbringbar sind, zum Beispiel durch Aufschweißen bzw. Aufkleben oder durch Spritzgießen und/oder Hinterpressen von verträglichen Werkstoffen gleicher und/oder anderer Zusammensetzung.

Diese Aufgabe wird erfindungsgemäß durch die Verwendung nur eines Bindeharzes aus Polyamid 11 oder Polyamid 12 oder Copolyamide auf Basis dieser beiden Grundtypen gelöst, wobei der Gehalt der Fasern vorteilhafterweise > 50 % Gewichtsprozente beträgt. Das Polyamid bzw. die Copolyamide können den nachwachsenden Rohstoffen als Granulat zugemischt oder mit diesen compoundiert werden. Sie können aber auch in Form von Fasern, Bändchen oder sonstigen Filamenten zugemischt werden. Die Oberfläche der erfindungsgemäß hergestellten Bauteile läßt sich infolge der guten Verträglichkeit lackieren. Es besteht auch die Möglichkeit, Funktionselemente auf die Oberfläche durch Schweißen oder Kleben aufzubringen und/oder in einem weiteren Arbeitsgang weitere Funktionselemente, z. B. durch Spritzgießen und/oder Hinterpressen von verträglichen Werkstoffen gleicher und/oder anderer Zusammensetzung, anzubringen.

## Patentansprüche

1. Bauteil aus Fasern von nachwachsenden Rohstoffen und Bindeharz, **gekennzeichnet durch** die Verwendung nur eines Bindeharzes aus Polyamid 11 oder Polyamid 12 oder Copolyamide auf Basis dieser beiden Grundtypen.

2. Bauteil nach Anspruch 1, **dadurch gekennzeichnet, daß** der Gehalt der Fasern > 50 % Gewichtsprozente beträgt.

3. Bauteil nach Anspruch 1 oder 2, **dadurch gekennzeichnet, daß** das Polyamid bzw. die Copolyamide den nachwachsenden Rohstoffen als Granulat zugemischt sind.

4. Bauteil nach Anspruch 1 oder 2, **dadurch gekennzeichnet, daß** das Polyamid bzw. die Copolyamide den nachwachsenden Rohstoffen in Form von Fasern, Bändchen oder sonstigen Filamenten zugemischt sind.

## Claims

1. Component of fibres of recyclable raw materials and binder resin, **characterised by** the use of a binder resin of polyamide 11 or polyamide 12 or copolyamide on the basis of these two basic types.

2. Component according to claim 1, **characterised in that** the content of fibres amounts to more than 50 percent by weight.

3. Component according to claim 1 or 2, **characterised in that** the polyamide or copolyamide is admixed to the recyclable raw materials as granulate.

4. Component according to claim 1 or 2, **characterised in that** the polyamide or copolyamide is admixed to the recyclable raw materials in the form of fibres, small strips or other filaments.

## Revendications

1. Pièce constituée de fibres d'une matière première recyclable, liées par une résine,
**caractérisée en ce que**
la résine de liaison est exclusivement composée d'une polyamide 11 ou 12 ou de copolyamides à base de ces deux polyamides.

2. Pièce selon la revendication 1,
**caractérisée en ce que**
la teneur en fibres est > 50 % en poids.

3. Pièce selon l'une quelconque des revendications 1 ou 2,
**caractérisée en ce que**
la polyamide ou les copolyamides sont ajoutées en mélange aux matières premières recyclables, sous forme de granulat.

4. Pièce selon l'une quelconque des revendications 1 ou 2,
**caractérisée en ce que**
la polyamide ou les copolyamides sont ajoutées en mélange aux matières premières recyclables sous la forme de fibres, de raclures ou autres filaments.
